# EUROPEAN PATENT SPECIFICATION

(11) **EP 4 155 654 B1**
(45) Date of publication and mention of the grant of the patent: **18.03.2026**
(21) Application number: 21461599.9
(22) Date of filing: 24.09.2021
(51) Int. Cl.: F28F 7/02, F28F 13/00

(54) **HEAT EXCHANGER CORE DESIGN**
KONSTRUKTION EINES WÄRMETAUSCHERKERNS
CONCEPTION DE NOYAU D'ÉCHANGEUR DE CHALEUR

(43) Date of publication of application: 29.03.2023
(73) Proprietor: Hamilton Sundstrand Corporation, Charlotte, NC 28217 (US)
(72) Inventor: LEWANDOWSKI, Rafa, 51-317 Wroclaw (PL); LEWANDOWSKI, Dawid, 51-317 Wroclaw (PL)
(74) Representative: Dehns

(56) References cited:
- US-A1- 2020 166 293
- US-A1- 2021 116 186
- US-B2- 11 079 186

## Description

### TECHNICAL FIELD

The present disclosure is concerned with the design and manufacture of a core of a heat exchanger using additive manufacture.

A method of forming fluid flow channels for a heat exchanger core comprising additively manufacturing the channels is known from document US 2021/116186 A1.

### BACKGROUND

Heat exchangers typically work by the transfer of heat between fluid flowing in parallel channels defined by metal plates of a heat exchanger core. Thermal properties are improved by the introduction of turbulence in the flow channels and so, conventionally, a heat exchanger core comprises corrugated metal plates arranged adjacent each other so as to define corrugated flow channels for the heat exchange fluids.

Additive manufacture, or 3D printing, has recently become a preferred manufacturing method for many parts and components due to the fact that it is relatively quick and low cost and allows for great flexibility in the design of new components and parts. Due to the fact that components and parts made by additive manufacture (AM) can be quickly made in a custom designed form, as required, AM also brings benefits in that stocks of components do not need to be manufactured and stored to be available as needed. AM parts can be made of relatively light, but strong materials. As AM is becoming more popular in many industries, there is interest in manufacturing heat exchangers using AM.

Although AM has many advantages in the manufacture of heat exchanger parts, the complex, corrugated shape of the channels means that it is difficult to fully remove the powder that results from the AM process from the corrugated channels. For best heat exchange properties, the channels need to be narrow and corrugated. The typical process of vibrating and rotating the plates, then rinsing fluid through the channel to remove the powder does not work well when the channel has a narrow, corrugated shape as the air/fluid cannot easily pass through the channel and remove all of the powder. Deposits of powder can, therefore, remain in the corrugations. AM can be used to advantage for manufacturing cores with straight channels, since the residual powder can be easily removed in the conventional way, but such channels then create less turbulence in the heat exchange fluid flowing through the channels and are less effective in terms of heat exchange properties.

There is a need for a method of manufacture, and design of fluid flow channels for a heat exchanger using additive manufacture, which allows for turbulence in the flow of fluid along the channels but also enables powder from the additive manufacture process to be effectively removed.

### SUMMARY

According to the disclosure, there is provided a method of forming fluid flow channels of a heat exchanger core as defined by claim 1.

According to the disclosure, there is also provided an additively manufactured arrangement of fluid flow channels for a heat exchanger, as defined by claim 6.

### BRIEF DESCRIPTION

Examples of the method and design of the disclosure will be described with reference to the drawings. It should be noted that variations are possible within the scope of the claims.
Figures 1A and 1B show perspective views taken at two different locations along fluid flow channels according to this disclosure.
Figure 1C is a side view of the channels of Figs. 1A and 1B.
Figures 2A and 2B show two possible heat exchanger core designs using channels not according to the invention.
Figure 3 shows a view of channels being manufactured by additive manufacturing according to the disclosure.
Figure 4 shows an alternative view of channels being manufactured by additive manufacturing according to the disclosure.
Figure 5 is a perspective view of channels manufactured by additive manufacturing according to the disclosure.

### DETAILED DISCLOSURE

The heat exchanger core channels according to the disclosure are formed to have a clear axial path extending from one end of the channel to the other but are shaped to have a varying geometry along the length of the channel to provide edges or curves for the fluid flow to create turbulence in the flow as the fluid flows along the channel. The overall average cross-sectional area of the channel remains the same along the channel length. The channels do not, therefore, have any corrugated sections and, instead, a straight axial path is provided, which simplifies powder removal.

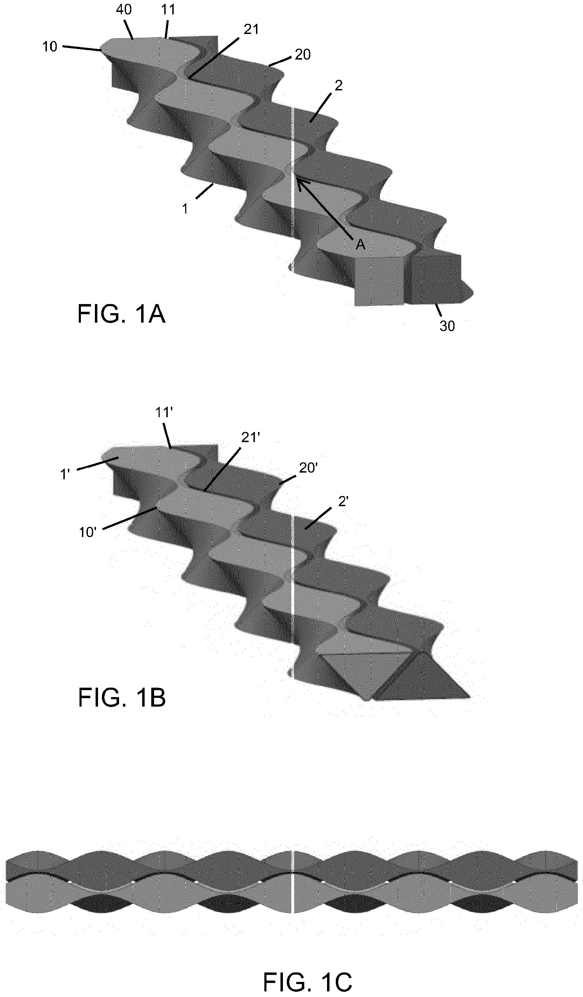

Figures 1A and 1B show, at two axial locations, how the fluid channels can be designed according to the disclosure. In each example, one channel (here 1, 1') is for the flow of cold fluid and the other (2, 2') is for the flow of hot fluid. As can be seen, in each example a straight axial fluid flow path A is defined along the length of the channel from one end 30 to the other end 40, but the outer walls 10, 11; 10',11'; 20, 21; 20', 21' define a shape that varies along the length of the channel thus defining channel walls whose angles vary along the length of the channel in relation to the fluid flow direction. The variations are such that the overall cross-sectional area of the flow channels remains the same, thus reducing the potential for pressure drop in the core, but the shapes induce fluid turbulence and therefore improve thermal efficiency.

Although one possible design of channel is shown, other shapes and configurations are also possible. Because the channels of the disclosure are made using additive manufacturing, the printing process may impose limitations on the angle that it is possible to produce. For AM manufacturing, consideration needs to be given, e.g. to the overall weight of the resulting product to avoid the channels being too heavy and collapsing. At present, it is thought that the angle of the side walls defining the turbulence-inducing shape should not exceed 45 degrees due to current 3D printing constraints.

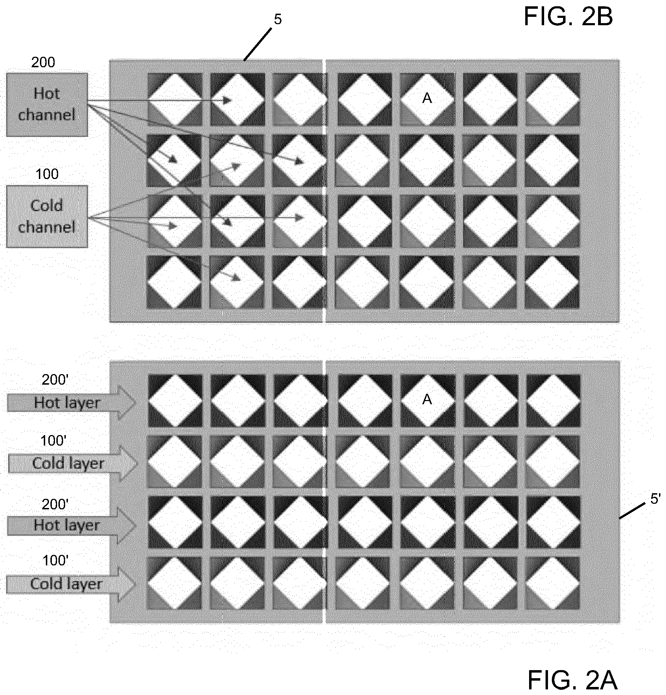

The resulting channels will, as mentioned above, have a straight axial path A extending all the way through the channels - i.e. one can see all the way through the channel from end-to-end - which is not the case with the classical corrugated channels. This feature can be seen in Figs. 2A and 2B which show two possible examples of how hot and cold channels, according to the disclosure, can be arranged relative to each other.

Fig. 2B shows an example corresponding to the classical pattern where the core 5' comprises alternating rows of cold channels 100' and hot channels 200'. Fig. 2B shows an alternative arrangement, found to have particularly good heat exchange properties, in which cold channels 100' and hot channels 200 are alternated in the horizontal and vertical directions of the core 5 in a checkerboard pattern. Because the channels are formed using additive manufacturing, this alternative design and other alterative patterns become possible. In conventionally manufactured cores, only alternating rows are possible.

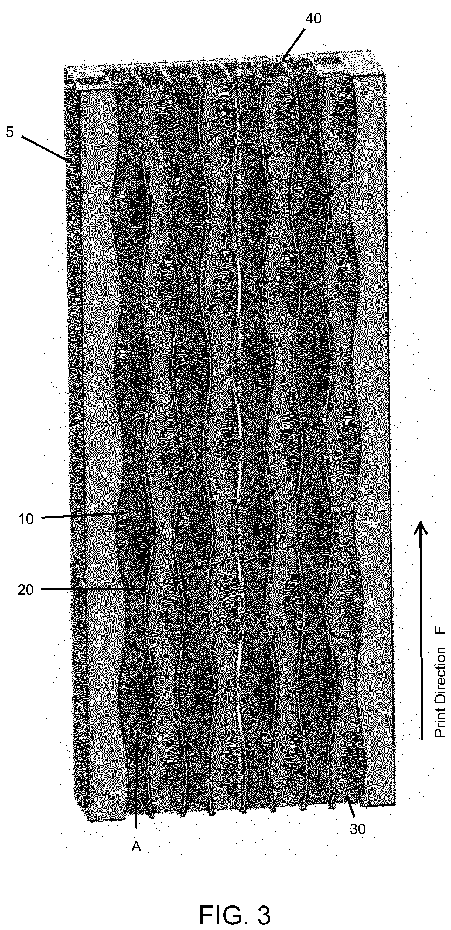

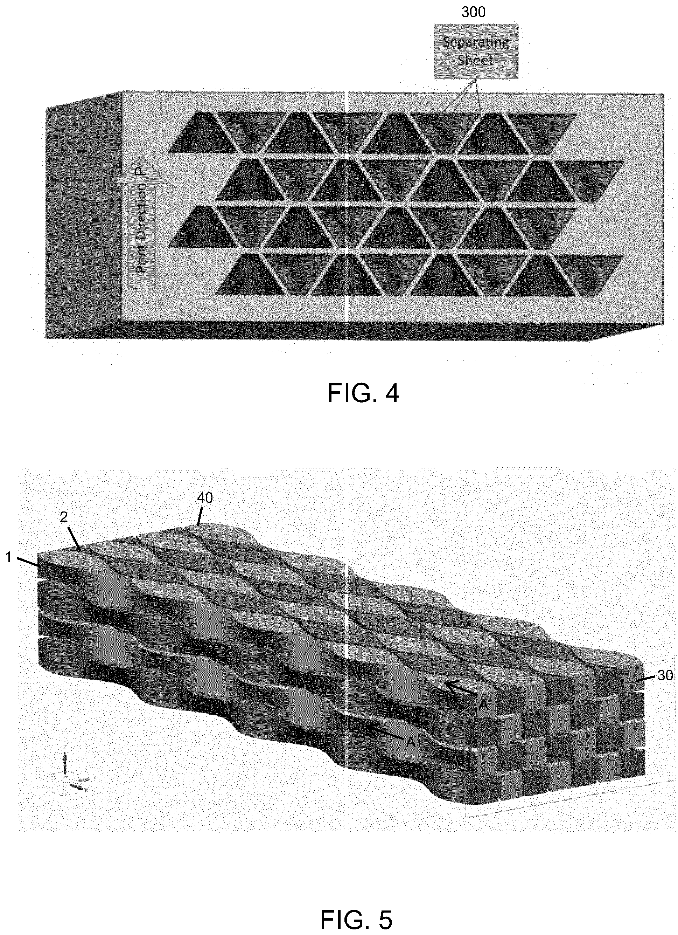

Figures 3 and 4 show how the channels can be formed (here using the example shapes of Figs. 1A and 1B, respectively). The variable cross-section channel geometry is simple and has been found to be 3D-printing friendly.

Figure 3 shows how channels can be printed in the fluid flow direction F. The example shown here is for a square or rectangular cross-section, and shows the straight axial path A right through the channels and the shaped channel walls to induce turbulence, as described above. Additive manufacture is use to build up the structure of the core 5 and define the channels from the bottom up, in the fluid flow direction F. This procedure can, of course, be used for any channel shape, size or length. Printing in the fluid flow direction F will result in smooth geometry transitions without any overhang. The print direction could also be directly opposite the fluid flow direction F.

Alternatively, as shown in Fig. 4, the core can be printed in a direction P perpendicular to the fluid flow, defining the side walls 10, 11, 10', 11', 20, 21, 20', 21' at the appropriate angles (within the capabilities of the printer. In this way, separating sheets 300 between the channel layers will cause overhangs. This can be mitigated by reducing the distance between the side walls.

An example of the resulting channels can be seen in Fig. 5.

Again, because additive manufacture is used to produce the channels according to this disclosure, the specific geometries and dimensions can be easily modified according to requirements. Different shapes will give rise to different flow patterns and turbulence within the channels. The more changes in shape, and the tighter the curves the fluid has to flow past, the greater the turbulence but more complex shapes are less efficient to print. For any particular design, a compromise can be reached between turbulence and printing simplicity, depending on the factors that govern the design.

The principle feature is that the additively manufactured channels have an axially extending path all the way through the channel and that the shape of the channel varies along its length. These features combine to enable effective powder removal required for additively manufactured cores and to provide turbulence in the fluid flow channel. By using additive manufacture, designs can be varied for different flow configurations and/or different patterns of channels, the pitch of the shaped parts of the channels can be adjusted to vary thermal performance and designs can be easily scaled up or down.

## Claims

1. A method of forming fluid flow channels for a heat exchanger core having a first end (30) and an opposite end (40), the channels extending from the first end to the opposite end, the method comprising additively manufacturing the channels (1, 2) such that each channel includes a straight axial fluid path portion (A) extending from the first end (30) of the heat exchanger core to the opposite end (40) and that the cross-sectional shape of the channel varies along its length to form curved contact surfaces for the fluid as it flows along the channel, while keeping the overall average cross-sectional area constant along each channel; wherein each channel includes outer walls that define a shape that varies from one end (30) of the channel to the other (40) and wherein the straight axial fluid path portion (A) is defined between the outer walls.

2. The method of claim 1, wherein the outer walls define a shape such that an angle between the outer walls and the straight axial fluid path portion varies along the length of the channel in relation to the direction of fluid flow through the channel from one end to the other.

3. A method of manufacturing a heat exchanger core, comprising forming a plurality of fluid flow channels as claimed in any preceding claim by additive manufacturing, the plurality of fluid flow channels comprising alternate layers of hot channels and cold channels.

4. The method of claim 3, whereby the channels are formed from the bottom up in the fluid flow direction.

5. The method of claim 3, whereby the channels are formed in a direction perpendicular to the fluid flow direction.

6. An additively manufactured arrangement of fluid flow channels for a heat exchanger having a first end (30) and an opposite end (40), the channels extending from the first end to the opposite end, the arrangement comprising an array of channels for the flow of hot and cold fluid in a heat exchange configuration, wherein each channel includes a straight axial fluid path portion extending from one end of the channel to the other, the ends of the channels being at the ends of the core, and wherein the cross-sectional shape of each channel varies along its length to form curved contact surfaces for the fluid as it flows along the channel, while keeping the average overall cross-sectional area constant along each channel, wherein each channel includes outer walls that define a shape that varies from one end (30) of the channel to the other (40) and wherein the straight axial fluid path portion (A) is defined between the outer walls.

7. The arrangement of claim 6, comprising alternating layers of hot and cold channels.

## Patentansprüche

1. Verfahren zum Ausbilden von Fluidströmungskanälen für einen Wärmetauscherkern mit einem ersten Ende (30) und einem gegenüberliegenden Ende (40), wobei sich die Kanäle von dem ersten Ende zu dem gegenüberliegenden Ende erstrecken, wobei das Verfahren das additive Fertigen der Kanäle (1, 2) umfasst, derart, dass jeder Kanal einen geraden axialen Fluidströmungsabschnitt (A) beinhaltet, der sich von dem ersten Ende (30) des Wärmetauscherkerns zu dem gegenüberliegenden Ende (40) erstreckt, und dass die Querschnittsform des Kanals entlang seiner Länge variiert, um gekrümmte Kontaktflächen für das Fluid auszubilden, während es entlang des Kanals strömt, während die durchschnittliche Gesamtquerschnittsfläche entlang jedes Kanals konstant gehalten wird; wobei jeder Kanal Außenwände beinhaltet, die eine Form definieren, die von einem Ende (30) des Kanals zu dem anderen (40) variiert, und wobei der gerade axiale Fluidströmungsabschnitt (A) zwischen den Außenwänden definiert ist.

2. Verfahren nach Anspruch 1, wobei die Außenwände eine Form definieren, derart, dass ein Winkel zwischen den Außenwänden und dem geraden axialen Fluidströmungsabschnitt entlang der Länge des Kanals in Bezug auf die Fluidströmungsrichtung durch den Kanal von einem Ende zu dem anderen variiert.

3. Verfahren zum Herstellen eines Wärmetauscherkerns, umfassend das Ausbilden einer Vielzahl von Fluidströmungskanälen wie in einem der vorhergehenden Ansprüche beansprucht durch additive Fertigung, wobei die Vielzahl von Fluidströmungskanälen abwechselnde Schichten von Heißkanälen und Kaltkanälen umfasst.

4. Verfahren nach Anspruch 3, wobei die Kanäle von unten nach oben in der Fluidströmungsrichtung ausgebildet werden.

5. Verfahren nach Anspruch 3, wobei die Kanäle in einer Richtung senkrecht zu der Fluidströmungsrichtung ausgebildet werden.

6. Additiv gefertigte Anordnung von Fluidströmungskanälen für einen Wärmetauscher mit einem ersten Ende (30) und einem gegenüberliegenden Ende (40), wobei sich die Kanäle von dem ersten Ende zu dem gegenüberliegenden Ende erstrecken, wobei die Anordnung eine Gruppierung von Kanälen für die Strömung von heißem und kaltem Fluid in einer Wärmetauschkonfiguration umfasst, wobei jeder Kanal einen geraden axialen Fluidströmungsabschnitt beinhaltet, der sich von einem Ende des Kanals zu dem anderen erstreckt, wobei die Enden der Kanäle an den Enden des Kerns angeordnet sind, und wobei die Querschnittsform jedes Kanals entlang seiner Länge variiert, um gekrümmte Kontaktflächen für das Fluid auszubilden, während es entlang des Kanals strömt, während die durchschnittliche Gesamtquerschnittsfläche entlang jedes Kanals konstant gehalten wird, wobei jeder Kanal Außenwände beinhaltet, die eine Form definieren, die von einem Ende (30) des Kanals zu dem anderen (40) variiert, und wobei der gerade axiale Fluidströmungsabschnitt (A) zwischen den Außenwänden definiert ist.

7. Anordnung nach Anspruch 6, umfassend abwechselnde Schichten von Heißkanälen und Kaltkanälen.

## Revendications

1. Procédé de formation de canaux d'écoulement de fluide pour un noyau d'échangeur de chaleur ayant une première extrémité (30) et une extrémité opposée (40), les canaux se prolongeant de la première extrémité à l'extrémité opposée, le procédé comprenant la fabrication additive des canaux (1, 2) de telle sorte que chaque canal comporte une partie de trajet de fluide axial rectiligne (A) se prolongeant de la première extrémité (30) du noyau d'échangeur de chaleur à l'extrémité opposée (40) et que la forme en section transversale du canal varie le long de sa longueur pour former des surfaces de contact incurvées pour le fluide lorsqu'il s'écoule le long du canal, tout en maintenant l'aire en section transversale moyenne globale constante le long de chaque canal ; dans lequel chaque canal comporte des parois extérieures qui définissent une forme qui varie d'une extrémité (30) du canal à l'autre (40) et dans lequel la partie de trajet de fluide axial rectiligne (A) est définie entre les parois extérieures.

2. Procédé selon la revendication 1, dans lequel les parois extérieures définissent une forme de telle sorte qu'un angle entre les parois extérieures et la partie de trajet de fluide axial rectiligne varie le long de la longueur du canal par rapport à la direction de l'écoulement de fluide à travers le canal d'une extrémité à l'autre.

3. Procédé de fabrication d'un noyau d'échangeur de chaleur, comprenant la formation d'une pluralité de canaux d'écoulement de fluide selon une quelconque revendication précédente par fabrication additive, la pluralité de canaux d'écoulement de fluide comprenant des couches alternées de canaux chauds et de canaux froids.

4. Procédé selon la revendication 3, dans lequel les canaux sont formés de bas en haut dans la direction d'écoulement de fluide.

5. Procédé selon la revendication 3, dans lequel les canaux sont formés dans une direction perpendiculaire à la direction d'écoulement de fluide.

6. Agencement fabriqué par voie additive de canaux d'écoulement de fluide pour un échangeur de chaleur ayant une première extrémité (30) et une extrémité opposée (40), les canaux se prolongeant de la première extrémité à l'extrémité opposée, l'agencement comprenant un réseau de canaux pour l'écoulement de fluide chaud et froid dans une configuration d'échange de chaleur, dans lequel chaque canal comporte une partie de trajet de fluide axial rectiligne se prolongeant d'une extrémité du canal à l'autre, les extrémités des canaux étant au niveau des extrémités du noyau, et dans lequel la forme en section transversale de chaque canal varie le long de sa longueur afin de former des surfaces de contact incurvées pour le fluide lorsqu'il s'écoule le long du canal, tout en maintenant l'aire en section transversale moyenne globale constante le long de chaque canal, dans lequel chaque canal comporte des parois extérieures qui définissent une forme qui varie d'une extrémité (30) du canal à l'autre (40) et dans lequel la partie de trajet de fluide axial rectiligne (A) est définie entre les parois extérieures.

7. Agencement selon la revendication 6, comprenant des couches alternées de canaux chauds et froids.
